# FASCICULE DE BREVET EUROPEEN

(11) **EP 3 025 205 B1**
(45) Date de publication et mention de la délivrance du brevet: **05.09.2018**
(21) Numéro de dépôt: 14755870.4
(22) Date de dépôt: 21.07.2014
(51) Int. Cl.: G05B 23/02, F02C 7/00, F01D 21/00

(54) **PROCÉDÉ D'ESTIMATION SUR UNE COURBE D'UN POINT PERTINENT POUR LA DÉTECTION D'ANOMALIE D'UN MOTEUR ET SYSTÈME DE TRAITEMENT DE DONNÉES POUR SA MISE EN OEUVRE**
SCHÄTZUNGSVERFAHREN EINES RELEVANTEN PUNKTES AUF EINER KURVE ZUR ERKENNUNG VON ANOMALIEN EINES MOTORS UND DATENVERARBEITUNGSSYSTEM ZUR IMPLEMENTIERUNG DAVON
METHOD OF ESTIMATION ON A CURVE OF A RELEVANT POINT FOR THE DETECTION OF AN ANOMALY OF A MOTOR AND DATA PROCESSING SYSTEM FOR THE IMPLEMENTATION THEREOF

(30) Priorité: 23.07.2013 FR 1357252
(43) Date de publication de la demande: 01.06.2016
(73) Titulaire: Safran Aircraft Engines, 75015 Paris (FR)
(72) Inventeur: RABENORO, Tsirizo, F-77550 Moissy-Cramayel Cedex (FR); LACAILLE, Jérôme, Henri, Noël, F-77550 Moissy-Cramayel Cedex (FR)
(74) Mandataire: Regimbeau
(86) Numéro de dépôt international: PCT/FR2014/051882
(87) Numéro de publication internationale: WO 2015/011395

(56) Documents cités:
- EP-A2- 2 570 880
- FR-A1- 2 939 170
- US-A1- 2003 065 409
- US-A1- 2005 267 702

## Description

### DOMAINE DE L'INVENTION

L'invention concerne de manière générale le domaine de la surveillance de l'état de fonctionnement d'un moteur.

L'invention concerne plus précisément un procédé d'estimation sur une courbe d'un point pertinent pour la détection d'anomalie d'un moteur ainsi que le système de traitement de données pour sa mise en oeuvre.

### ETAT DE LA TECHNIQUE

Dans le domaine de l'aéronautique, il est important de pouvoir surveiller l'état de fonctionnement d'un moteur d'aéronef afin de prévoir et planifier des opérations de maintenance sur ce moteur. L'état de fonctionnement du moteur peut en effet évoluer au cours du temps et une surveillance adaptée peut permettre de détecter des anomalies de fonctionnement, surveiller une dégradation du moteur et planifier à l'avance d'éventuelles opérations de maintenance. Cela permet notamment d'éviter des retards sur les vols, d'effectuer des réparations avant que la dégradation ne soit trop importante, de regrouper des opérations de réparation entre elles, etc...

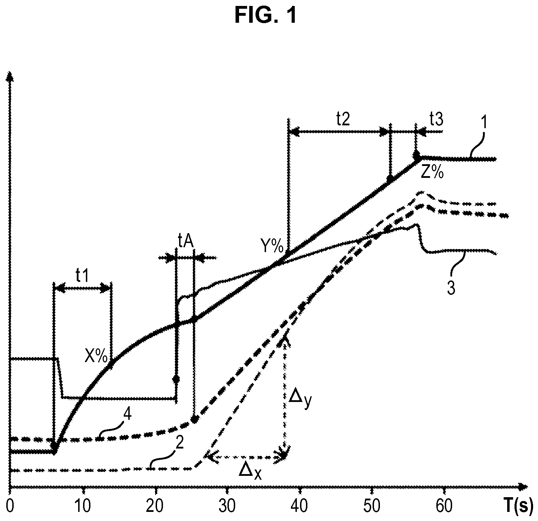

Des outils de surveillance ont été mis au point afin d'identifier des anomalies altérant le fonctionnement du moteur à partir de mesures de paramètres physiques décrivant l'état du moteur, comme par exemple dans le document US2005/0267702. Des procédés ont également été décrits permettant de mesurer des paramètres de fonctionnement du moteur à surveiller, de calculer des indicateurs représentatifs de l'état de fonctionnement du moteur, et d'identifier des anomalies de fonctionnement du moteur à partir desdits indicateurs. Un exemple de tels procédés est décrit dans les brevets de la demanderesse FR2939924 et FR2942001. Ces indicateurs sont définis par des experts du comportement des moteurs. Ainsi, en ce qui concerne la détection des anomalies empêchant le démarrage du moteur, des indicateurs tels qu'un temps d'ouverture de la vanne de démarrage, un temps pour atteindre une accélération maximale du compresseur haute pression, des temps t1, t2 et t3 des première, deuxième et troisième phase de démarrage, un temps d'allumage du moteur, un temps de fermeture de la vanne de démarrage, un gradient de la température des gaz d'échappement ou un temps d'arrêt du moteur peuvent être définis. La Figure 1 montre l'évolution de la vitesse 1 du compresseur haute pression, de la température 2 des gaz d'échappement EGT (Exhaust Gaz Temperature), du débit 3 de carburant envoyé aux injecteurs et de la pression 4, ainsi que les durées t1, t2 et t3.

De tels indicateurs peuvent être calculés en fonction d'instants pertinents sur les courbes des mesures des paramètres de fonctionnement du moteur. De tels instants pertinents sont repérés sur ces courbes par les experts.

Ces procédés présentent l'inconvénient de faire intervenir de manière systématique des experts pour repérer de tels instants et rendent de ce fait nécessaire le stockage de l'intégralité de ces courbes de mesure tant qu'un tel repérage n'a pas été réalisé par un expert.

Afin de palier à ces inconvénients, des outils permettant de réaliser une détection automatique de tels instants pertinents, sans faire appel à un expert, ont été développés. L'utilisation de tels outils permet notamment de ne plus devoir stocker une quantité importante de données sur de longues durées, seuls les indicateurs calculés à partir des instants pertinents déterminés automatiquement étant stockés in fine.

Certains de ces outils peuvent notamment extraire un instant pertinent particulier à partir des descriptions de cet instant fournies par des experts lors du développement de l'outil. Néanmoins, de telles solutions nécessitent de développer un outil différent pour chaque type d'instant pertinent à détecter. Elles présentent également l'inconvénient d'imposer à l'expert de décrire finement les caractéristiques de l'instant pertinent, de manière compréhensible pour le concepteur de l'outil, afin que celui-ci retranscrive ces caractéristiques sous forme algorithmique.

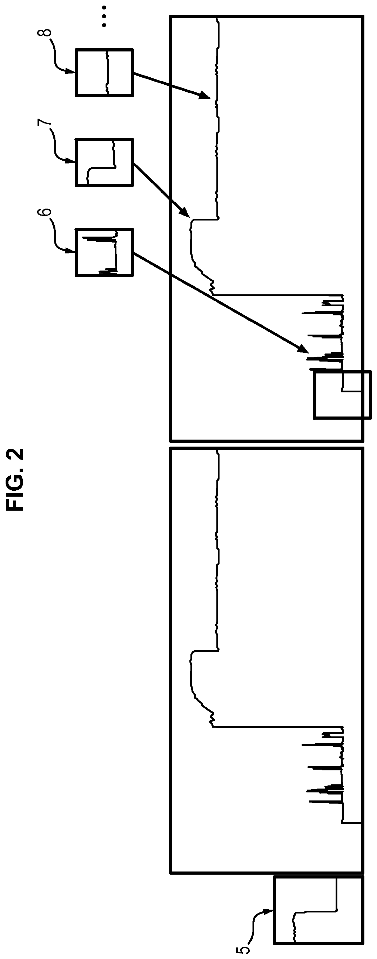

Afin de s'affranchir de ces contraintes, des outils génériques ont été développés, permettant de détecter un instant pertinent sur n'importe quel type de courbe sans avoir à adapter l'outil et ne nécessitant aucune description détaillée des caractéristiques d'un tel instant par un expert. Les outils existants de ce type peuvent par exemple être basés sur de la reconnaissance de forme. Leur principe est de reconnaître sur une courbe une forme caractéristique connue qui est prise par la courbe au voisinage d'un instant pertinent à détecter, comme représenté sur la Figure 2 illustrant le cas où on cherche à déterminer l'emplacement sur une courbe d'une forme caractéristique telle que la forme 5.

Le temps de détection par de tels outils d'un point pertinent sur une courbe est néanmoins particulièrement long. En effet l'ensemble de la courbe est parcourue afin d'extraire des formes 6, 7 et 8 prises localement par la courbe, et ces formes sont ensuite comparées à la forme recherchée. De plus une telle analyse doit être menée à différentes échelles afin de détecter la forme recherchée dans la courbe quelle que soit l'échelle à laquelle cette forme apparaît dans la courbe. De tels traitements imposent une quantité importante de calculs qui ralentissent la détection d'un point pertinent sur la courbe.

De plus de tels outils sont focalisés sur la détection d'une forme particulière au voisinage du point d'intérêt et négligent l'information portée par la forme globale de la courbe.

Il existe donc un besoin d'un outil générique permettant de détecter de manière rapide un point pertinent sur une courbe sans réaliser une couteuse analyse multi-échelle, tout en prenant en compte l'ensemble de ladite courbe et en limitant la quantité de données à stocker.

### RESUME DE L'INVENTION

La présente invention se rapporte ainsi selon un premier aspect à un procédé d'estimation sur une courbe d'un point pertinent pour une détection d'anomalie d'un moteur, ladite courbe représentant une évolution en fonction du temps de paramètres physiques de fonctionnement du moteur mesurés par au moins un capteur sur ledit moteur,
mis en oeuvre par un calculateur relié à des premiers moyens de stockage,
lesdits premiers moyens de stockage mémorisant au moins un profil comprenant un code binaire dont chaque composante code un sens de variation entre deux points caractéristiques consécutifs d'au moins une courbe d'apprentissage, un modèle permettant d'estimer un point pertinent à partir d'un ensemble de points caractéristiques d'une courbe et un filtre,
ledit procédé comprenant :
a/ la sélection d'un profil mémorisé dans les premiers moyens de stockage ;
b/ l'application du filtre du profil sélectionné à ladite courbe ;
c/ la détermination d'un ensemble de points caractéristiques de ladite courbe filtrée et d'un code binaire dont chaque composante code le sens de variation de deux points caractéristiques consécutifs appartenant audit ensemble de points caractéristiques ;
d/ la comparaison du code déterminé et du code du profil sélectionné ;
e/ en fonction de ladite comparaison, l'estimation du point pertinent sur ladite courbe à partir des points caractéristiques de ladite courbe filtrée et du modèle du profil sélectionné.

Un tel procédé permet de réaliser une détermination rapide d'un point pertinent sur une courbe, quel que soit le type de point pertinent, sans faire appel à un expert. Un tel procédé permet également de tenir compte de l'ensemble de la forme de la courbe, tout en réduisant au minimum la quantité d'informations à stocker en ne mémorisant que les points caractéristiques de cette courbe.

Selon d'autres caractéristiques avantageuses et non limitatives :
- si le code déterminé est différent du code du profil sélectionné, un nouveau profil mémorisé dans les premiers moyens de stockage peut être sélectionné et le calculateur peut exécuter à nouveau les étapes b/ à e/ du procédé selon le premier aspect ;
- le point pertinent peut être choisi parmi un instant d'ouverture d'une valve, un instant de variation nette d'une température ou d'une pression, un instant d'atteinte d'un certain régime par un compresseur haute pression ou un compresseur basse pression, un instant de débrayage d'un démarreur ;
- les points caractéristiques de courbes peuvent être choisis parmi des points d'inflexion, des extrema locaux, des changements brusques de pentes ;

Ces points sont des points particuliers d'une courbe qui permettent de caractériser la forme globale de la courbe puisque toutes les courbes d'un même paramètre mesuré lors de la même phase de fonctionnement sur différents moteurs présentent la même forme globale et font apparaître les mêmes points caractéristiques.
- un profil peut comprendre en outre un seuil et les points caractéristiques peuvent être des extrema locaux consécutifs dont la différence d'ordonnées est supérieure audit seuil ;

Ceci permet de minimiser le nombre de points caractéristiques à mémoriser en ne retenant que les points réellement distincts de leurs voisins.
- les modèles peuvent être des modèles linéaires généralisés avec sélection de variables ;
- les modèles peuvent vérifier l'équation : t = AX
   où
   - t est l'abscisse du point pertinent à estimer,
   - A est un vecteur ligne contenant des coefficients de régression,
   - X est un vecteur colonne dont les composantes sont des abscisses des points caractéristiques et leurs transformées ;

Un tel modèle permet de déterminer l'abscisse d'un point pertinent uniquement à partir des abscisses des points caractéristiques, sans nécessiter une quantité de calcul importante.
- dans un mode de mise en oeuvre du procédé selon le premier aspect, le calculateur peut exécuter :
   ∘ une étape d'estimation à partir des points pertinents estimés d'indicateurs spécifiques choisis pour leur représentativité de l'état de fonctionnement du moteur ;
   ∘ une étape de diagnostic du moteur à partir des indicateurs spécifiques estimés ;
   ∘ une étape de mémorisation dans des moyens de stockage, vol après vol, des indicateurs spécifiques estimés et une étape de pronostic d'une dégradation de l'état de fonctionnement du moteur à partir de l'évolution des indicateurs spécifiques mémorisés ;

Ceci permet de diagnostiquer et de pronostiquer de manière automatisée une éventuelle défaillance du moteur ou une dégradation de son état de fonctionnement.
- chaque profil mémorisé dans les premiers moyens de stockage peut être déterminé par un processus d'apprentissage ;
- ce processus d'apprentissage pour un profil peut comprendre :
   a/ l'affichage par un dispositif d'affichage de plusieurs courbes d'apprentissage ;
   b/ la détermination par ledit calculateur d'un point pertinent pour la détection d'anomalie sur chacune des courbes d'apprentissage, ledit point pertinent de chacune des courbes d'apprentissage étant sélectionné par un expert à l'aide de moyens de saisie ;
   c/ le stockage dans des deuxièmes moyens de stockage de chacune desdites courbes d'apprentissage associée audit point pertinent déterminé ;
   d/ la sélection par ledit calculateur d'un filtre et d'un modèle ;
   e/ l'application par ledit calculateur du filtre sélectionné à chacune des courbes d'apprentissage ;
   f/ la détermination par ledit calculateur des points caractéristiques de chacune des courbes d'apprentissage filtrées ;
   g/ la détermination par ledit calculateur parmi les points caractéristiques déterminés de points caractéristiques récurrents apparaissant sur chaque courbe d'apprentissage filtrée et d'un code binaire dont chaque composante code le sens de variation entre deux points caractéristiques récurrents consécutifs ;
   h/ à partir des points caractéristiques récurrents déterminés et du modèle sélectionné, l'estimation par ledit calculateur du point pertinent ;
   i/ l'estimation par ledit calculateur de l'erreur associée aux filtre et modèle sélectionnés à l'étape d/ par comparaison du point pertinent estimé avec le point pertinent sélectionné par l'expert à l'étape b/ ;
   j/ la mémorisation, dans lesdits premiers moyens de stockage, d'un profil comprenant ledit code binaire déterminé, ledit filtre et ledit modèle permettant de minimiser l'erreur estimée ou d'obtenir une erreur estimée inférieure à un seuil déterminé ;

Un tel processus permet de caractériser un point pertinent de manière automatique, sans nécessiter d'un expert que celui ait à décrire précisément les caractéristiques d'un tel point et sans nécessiter qu'un algorithme particulier soit défini pour chaque type de point pertinent.

Selon un deuxième aspect, l'invention concerne un produit programme d'ordinateur comprenant des instructions de code de programme pour l'exécution des étapes du procédé selon le premier aspect lorsque ledit programme est exécuté sur un ordinateur ;

Selon un troisième aspect, l'invention concerne un système de traitement de données comprenant un calculateur, des moyens de saisi, au moins un dispositif d'affichage caractérisé en ce qu'il est configuré pour mettre en oeuvre les étapes du procédé selon le premier aspect.

De tels système et produit programme d'ordinateur présentent les mêmes avantages que ceux évoqués pour le procédé selon le premier aspect.

### PRESENTATION DES DESSINS

D'autres caractéristiques et avantages ressortiront encore de la description qui suit, laquelle est purement illustrative et non limitative et peut être lue en regard des figures annexées, parmi lesquelles :
- la figure 1 représente un diagramme illustrant la construction d'indicateurs spécifiques,
- la figure 2 représente un diagramme illustrant un exemple d'algorithme basé sur de la reconnaissance de forme,
- la figure 3 représente de manière schématique les moyens matériels mis en oeuvre dans le cadre de l'invention,
- la figure 4 représente un exemple d'interface graphique affichée à un expert dans le cadre de l'invention,
- la figure 5 représente un ordinogramme illustrant des étapes du processus d'apprentissage selon un mode de réalisation de l'invention,
- la figure 6 représente un diagramme illustrant un exemple de modèle permettant de déterminer l'abscisse d'un point pertinent selon un mode de réalisation de l'invention,
- la figure 7 illustre des exemples de points caractéristiques de courbe,
- la figure 8 représente un ordinogramme illustrant des étapes du procédé d'estimation sur une courbe d'un point pertinent pour la détection d'anomalie d'un moteur selon un mode de réalisation de l'invention.

### DESCRIPTION DETAILLEE D'UN MODE DE REALISATION

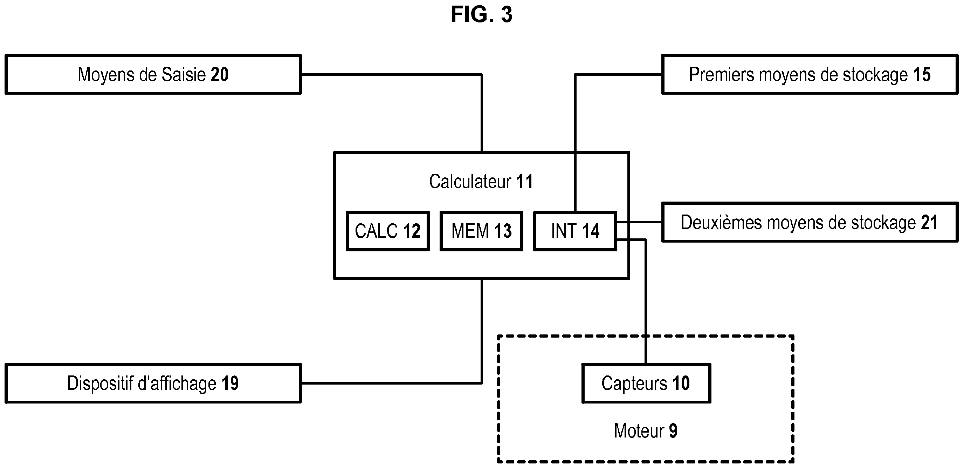

En référence à la figure 3, une mise en oeuvre pour l'invention concerne un procédé d'estimation sur une courbe d'un point pertinent pour une détection d'anomalie d'un moteur 9, ladite courbe représentant une évolution en fonction du temps de paramètres physiques de fonctionnement du moteur mesurés par au moins un capteur 10 sur ledit moteur 9.

Un tel procédé est mis en oeuvre par un calculateur 11 comportant des moyens de calcul 12, une mémoire 13 et une interface de communication 14. Cette interface peut permettre au calculateur de communiquer avec des capteurs 10 aptes à acquérir des mesures de paramètres de fonctionnement du moteur à différents instants. Une telle interface peut être une interface filaire de type Ethernet, USB, FireWire, série, parallèle ou une interface sans-fil de type Wifi ou Bluetooth.

L'estimation par le calculateur 11 d'un point pertinent sur une courbe est réalisée à partir de comparaisons à des modèles de courbes dit profils. Les courbes analysées n'étant pas toujours similaires, le procédé utilise plusieurs profils. A titre d'exemple, l'analyse de la température des gaz de sorties peut utiliser deux profils, un pour les démarrages à froid et un pour les démarrages à chaud.

De tels profils peuvent être déterminés par un processus d'apprentissage et stockés dans des premiers moyens de stockage 15. Ces premiers moyens de stockage peuvent être sous forme d'un dispositif externe au calculateur tel qu'un disque dur externe USB ou un disque dur réseau (« NAS »). Les premiers moyens de stockage communiquent alors avec le calculateur par le biais d'une interface de communication telle que l'interface de communication 14. En variante les premiers moyens de stockage peuvent être intégrés au calculateur 11. La mémorisation des profils dans les premiers moyens de stockage peut prendre la forme d'une base de données stockée dans les premiers moyens de stockage.

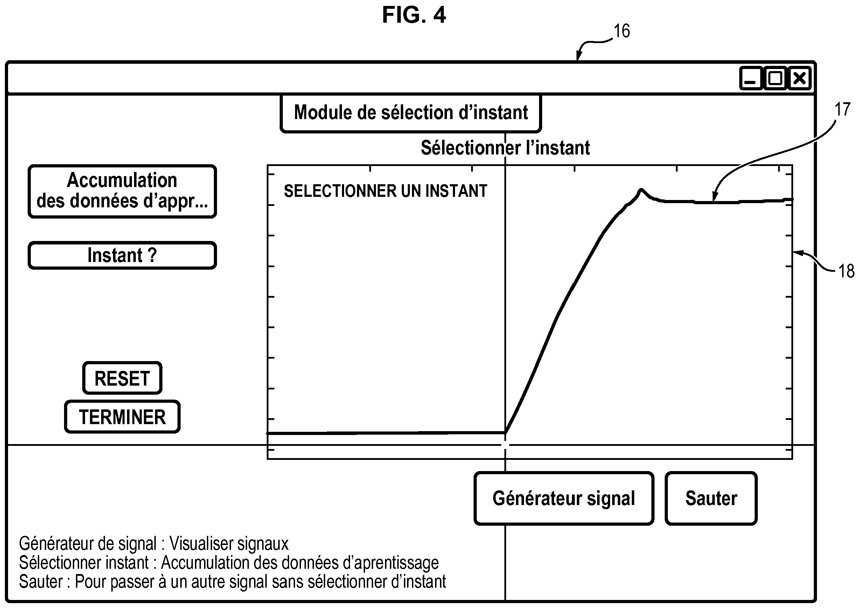

Ledit processus d'apprentissage peut faire intervenir un expert du fonctionnement des moteurs d'aéronef afin que celui-ci sélectionne sur des courbes d'apprentissage un point pertinent. Pour cela, l'expert dispose d'une interface graphique 16 telle que celle représentée en figure 4, calculée par le calculateur 11. Une telle interface graphique présente une courbe 17 dans une fenêtre de sélection 18. Cette interface est affichée sur un dispositif d'affichage 19 pouvant être n'importe quel type d'écran tel qu'un écran LCD, plasma, OLED ou bien un écran de vidéoprojection couplé à un vidéoprojecteur. Un tel dispositif d'affichage est relié au calculateur 11 par une connexion vidéo analogique ou numérique telle qu'une connexion Péritel,VGA, DVI, DisplayPort ou HDMI. L'expert utilise des moyens de saisie 20 pour sélectionner un point pertinent sur une courbe d'apprentissage 17 affichée dans la fenêtre de sélection 18. De tels moyens de saisie peuvent consister en un clavier et une souris, un trackpad, un trackball ou tout autre moyen de pointage lui permettant de spécifier un point sur la courbe 17 tel qu'une interface de détection de mouvement. Les données mémorisées au cours du processus d'apprentissage peuvent être stockés sur des deuxièmes moyens de stockage 21 similaires aux premiers moyens de stockage 15 et pareillement connectés au calculateur 11.

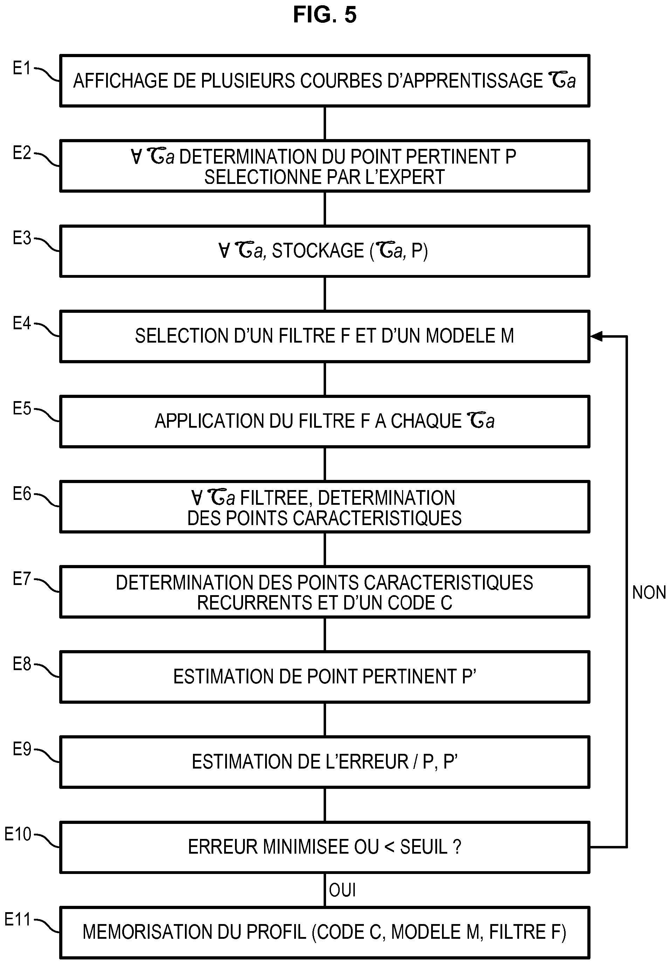

Comme représenté en Figure 5, ledit processus d'apprentissage comporte les étapes E1 à E11 décrites ci-dessous.

Lors d'une première étape E1, plusieurs courbes d'apprentissage 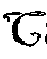 a peuvent être présentées à l'expert. Ces courbes sont affichées dans une fenêtre de sélection 18 de l'interface graphique 16. Ces courbes sont toutes similaires bien que non identiques et correspondent toutes à un même type de courbe sur lequel un point pertinent doit pouvoir être déterminé automatiquement. Ces courbes peuvent par exemple être des courbes de température, de pression, de débit d'air ou de carburant mesurées en différents points d'un moteur d'aéronef ou bien encore des courbes de vitesse de rotation de différents éléments tournants d'un tel moteur comme les compresseurs haute et basse pression. Une présélection d'un tel lot de courbes similaires peut avoir été réalisée automatiquement par une machine ou bien manuellement par un expert parmi un ensemble de courbes mesurées sur un ou plusieurs moteurs d'aéronef, par exemple en sélectionnant un type de grandeur et en séparant les courbes mesurées sur un cycle entier de vol et celles mesurées uniquement durant la phase de démarrage.

Lors d'une deuxième étape E2, un expert sélectionne sur chacune de ces courbes 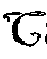 a un point pertinent P à l'aide des moyens de saisie 20. Un point pertinent peut correspondre à un instant particulier de la courbe tel qu'un instant d'ouverture d'une valve, un instant de variation nette d'une température ou d'une pression, un instant d'atteinte d'un certain régime par le compresseur haute pression ou le compresseur basse pression, un instant de débrayage du démarreur.

La détermination de tels instants peut permettre de calculer des indicateurs spécifiques utiles pour estimer l'état de fonctionnement d'un moteur tel que la durée des différentes phases de démarrage du moteur, le temps d'allumage, le temps d'arrêt ou encore les gradients maximal et moyen de la température des gaz d'échappement.

Lors d'une troisième étape E3, les courbes d'apprentissage 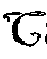 a sont mémorisées avec leur point pertinent sélectionné par l'expert dans les deuxièmes moyens de stockage 21. Le point pertinent sélectionné peut être mémorisé sous la forme de son abscisse sur la courbe d'apprentissage.

Lors d'une quatrième étape E4, un filtre F et un modèle M sont sélectionnés. Un filtre consiste en une fonction de filtrage adaptée pour modifier une courbe de façon à simplifier la détection sur celle-ci d'un point caractéristique. Un tel filtrage peut consister en un lissage, une dérivation simple ou double ou bien encore un traitement d'accentuation des irrégularités de la courbe. Les fonctions de filtrage correspondantes peuvent être une distribution gaussienne, en créneau, en triangle, une ondelette de Haar ou de Daubechies.

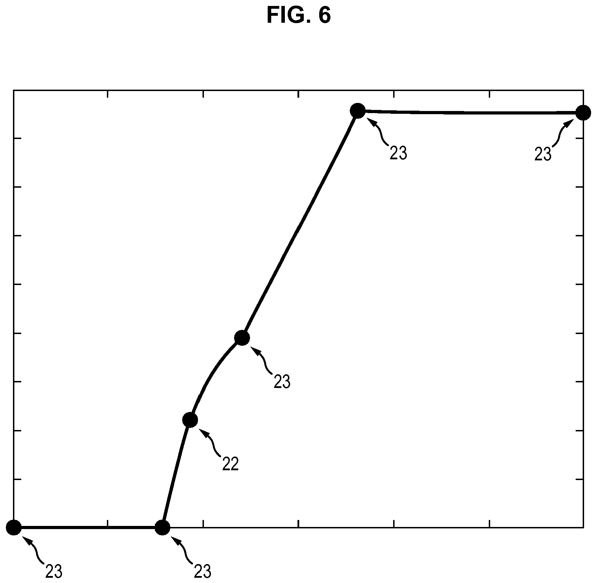

Comme représenté en Figure 6, un modèle consiste en une fonction permettant de déterminer l'abscisse d'un point pertinent 22 à partir des abscisses de points caractéristiques 23 d'une courbe. De tels points caractéristiques peuvent correspondre à des extrema locaux, des points d'inflexions ou des points de brusque changement de pente. Dans une variante, le modèle peut être un modèle linéaire généralisé avec sélection de variables. Un tel modèle peut vérifier l'équation : t = AX
où
- t est l'abscisse du point pertinent à estimer ;
- A est un vecteur ligne contenant des coefficients de régression
- X est un vecteur colonne dont les composantes sont des abscisses x des points caractéristiques et des transformées de ces abscisses tel que In x, tan x, 1/x...

La sélection d'un filtre F et d'un modèle M peut être réalisée automatiquement par le calculateur 11, éventuellement aléatoirement parmi une base de filtres et des plages de valeurs possibles des coefficients de régression, ou bien une telle sélection peut faire intervenir l'expert.

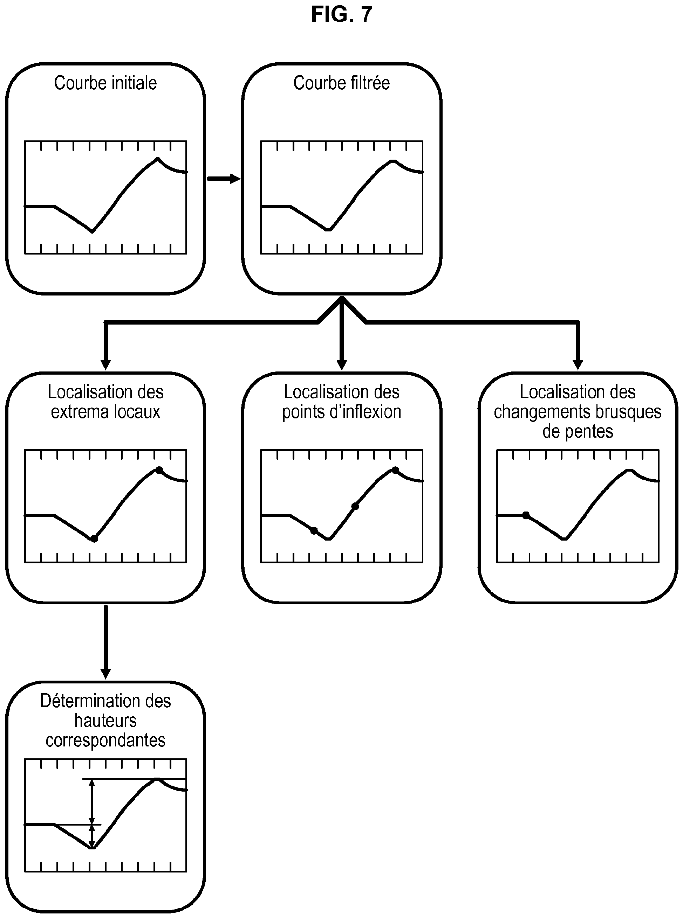

Lors d'une cinquième étape E5 le filtre F sélectionné à la quatrième étape E4 est appliqué à chacune des courbes d'apprentissage 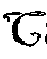 a. L'application du filtre peut consister en un calcul de convolution entre chaque courbe et la fonction de filtrage du filtre de façon à obtenir des courbes d'apprentissage filtrées comme représenté en Figure 7.

Lors d'une sixième étape E6, le calculateur 11 détermine les points caractéristiques de chacune des courbes d'apprentissage filtrées. Comme représenté en Figure 7 et précédemment mentionné, ces points caractéristiques peuvent correspondre à des extrema locaux, des points d'inflexions, c'est-à-dire présentant un maximum de la dérivée première, ou des points de brusque changement de pente, c'est-à-dire présentant un maximum de dérivée seconde entre un extremum local et le point d'inflexion, et entre le point d'inflexion et l'autre extremum local. Dans le cas de la détermination des extrema locaux, il est possible de minimiser le nombre de points retenus en ne conservant à l'issu de cette détermination que des extrema locaux consécutifs dont la différence d'ordonnée est supérieure à un premier seuil prédéterminé. Avantageusement seule l'abscisse de ces points caractéristiques est mémorisée.

Lors d'une septième étape E7, le calculateur détermine parmi l'ensemble des points caractéristiques des courbes d'apprentissages 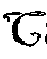 a filtrées, des points caractéristiques récurrents. Ces points récurrents sont des points caractéristiques détectés dans la majorité des courbes d'apprentissages filtrées traitées. Selon une variante, ces points caractéristiques récurrents sont déterminés uniquement à partir des extrema locaux des courbes d'apprentissage. Dans cette variante, les points caractéristiques récurrents autres que les extrema locaux récurrents consécutifs sont déterminés a posteriori et de la façon suivante : un point d'inflexion est choisi entre deux extrema locaux consécutifs, et si il y en a plusieurs, on choisit celui ayant l'ordonné maximal sur la dérivée première. Un point représentant un changement brusque de variation est choisi entre un extremum local et un point d'inflexion, et un point d'inflexion et un extremum local. S'il y a plusieurs points de brusque variation, on choisit celui ayant l'ordonnée maximale sur la dérivée seconde.

Le calculateur 11 détermine également un code binaire C dont chaque composante code le sens de variation entre deux points caractéristiques récurrents consécutifs. Par exemple un « 1 » peut coder le fait qu'un point caractéristique d'ordonnée y1 est suivi par un point caractéristique d'ordonnée y2 supérieure à y1, et un « 0 » peut coder alors le fait qu'un point caractéristique d'ordonnée y1 est suivi par un point caractéristique d'ordonnée y2 inférieur à y1. Un tel code constitue alors une représentation binaire du profil des ordonnées des points caractéristiques récurrents communs à la majorité des courbes d'apprentissage 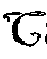 a. Les courbes d'apprentissage filtrées sur lesquelles n'apparaissent pas les points caractéristiques récurrents déterminés peuvent être mises de côté et pourront être utilisées pour la détermination d'un autre profil au cours d'un processus d'apprentissage ultérieur. Un premier profil est ainsi déterminé à partir d'un maximum de courbes d'apprentissage puis un second profil est déterminé à partir d'un maximum de courbes parmi les courbes restantes...

Lors d'une huitième étape E8 le calculateur 11 détermine l'abscisse d'un point pertinent P' sur une ou plusieurs des courbes d'apprentissage 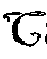 a à partir des points caractéristiques récurrents, notamment de leurs abscisses, déterminés à la septième étape E7 et du modèle M choisi à la quatrième étape E4.

Lors d'une neuvième étape E9, le calculateur 11 estime une erreur de détermination de chacun des points pertinents déterminés à la huitième étape E8 en comparant l'abscisse d'un point pertinent P' déterminé à la huitième étape E8 et l'abscisse du point pertinent P sélectionné par l'expert sur la même courbe d'apprentissage à la deuxième étape E2. Le calculateur détermine ensuite la moyenne quadratique de l'ensemble des erreurs de détermination estimées. Cette erreur moyenne de détermination est associée au filtre F et au modèle M sélectionnés à la quatrième étape E4.

Lors d'une dixième étape E10, le calculateur détermine si l'erreur moyenne de détermination du point pertinent estimée à la neuvième étape E9 est suffisamment faible pour considérer la détermination des points pertinents réalisée à la huitième étape E8 comme satisfaisante. Selon un mode de réalisation, le calculateur compare l'erreur moyenne de détermination à un second seuil prédéterminé. Tant que l'erreur moyenne de détermination est supérieure à ce second seuil prédéterminé, le calculateur rejette le filtre F et le modèle M sélectionné à l'étape E4, sélectionne un nouveau filtre et un nouveau modèle, puis met à nouveau en oeuvre les étapes E5 à E10 avec ce nouveau filtre et ce nouveau modèle. Selon un autre mode de réalisation, le calculateur met en oeuvre les étapes E4 à E10 un nombre de fois prédéterminé et sélectionne le couple filtre F/modèle M permettant d'obtenir la plus faible erreur moyenne de détermination du point pertinent.

Lors d'une onzième étape E11, le calculateur 11 mémorise dans un profil le filtre F et le modèle M sélectionnés à la dixième étape E10 ainsi que le code binaire C déterminé à la septième étape E7. Le profil peut également comprendre le premier seuil prédéterminé utilisé à la sixième étape E6 pour la détermination des extrema locaux. Ce profil est enregistré dans les premiers moyens de stockage 15.

Lorsque les courbes d'apprentissage sont des courbes à plusieurs dimensions, les étapes précédentes sont appliquées selon chacune des dimensions. Selon une première variante, un profil est mémorisé à l'issue de la onzième étape E11 pour chacune des dimensions. Selon une deuxième variante, n'est mémorisé à l'issue de la onzième étape E11 qu'un profil comportant le couple filtre/modèle de la dimension présentant l'erreur de détermination la plus faible. Dans ces deux variantes chaque profil intègre alors une indication de la dimension à laquelle il se rapporte. Selon une troisième variante, le modèle M sélectionné est un modèle avec sélection de variable vérifiant l'équation t = AX, X étant un vecteur dont les composantes sont des abscisses de points caractéristiques selon chacune des dimensions des courbes d'apprentissage. Un tel modèle est dit multidimensionnel. De tels points caractéristiques sont alors déterminés lors de la sixième étape E6 pour chacune des dimensions de chaque courbe d'apprentissage. De mêmes les points caractéristiques récurrents et le code binaire sont alors déterminés lors de la septième étape E7 pour chacune de ces dimensions. Ces codes binaires sont également enregistrés dans un profil multidimensionnel lors de la onzième étape E11, associés à une indication de la dimension à laquelle ils se rapportent.

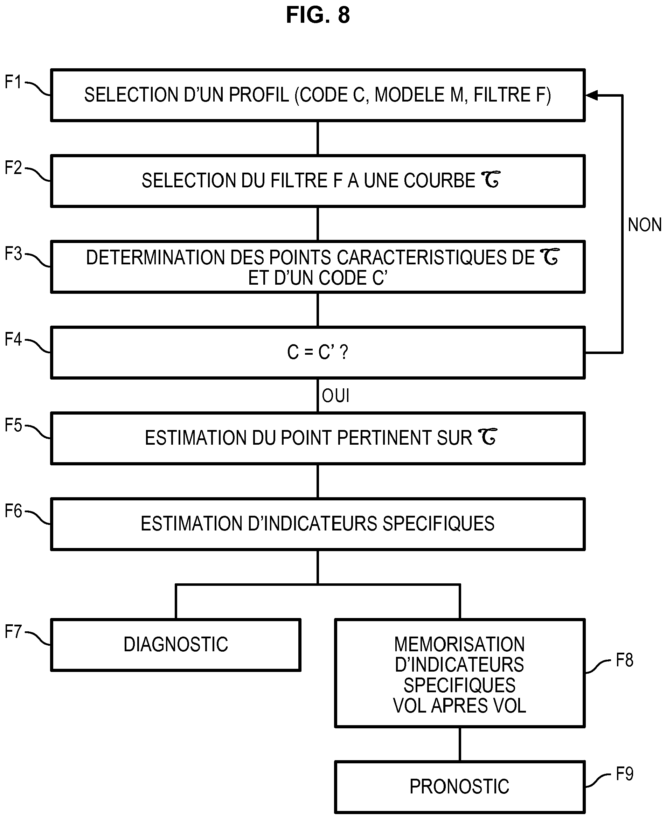

Comme représenté en Figure 8, le procédé d'estimation sur une courbe 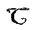 d'un point pertinent pour la détection d'anomalie du moteur 9, à l'aide de profils déterminés selon le processus d'apprentissage décrit ci-dessus, peut être mis en oeuvre par le calculateur 11, selon des étapes F1 à F9.

Cette courbe 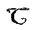 est obtenue à partir de mesures de paramètres de fonctionnement du moteur acquises à différents instants par au moins un capteur 10.

Lors d'une première étape F1, le calculateur sélectionne un profil parmi les profils générés par le processus d'apprentissage décrit ci-dessus et mémorisés dans les premiers moyens de stockage 15.

Lors d'une deuxième étape F2, le calculateur 11 applique à la courbe 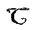 le filtre F associé au profil sélectionné à la première étape F1 et obtient une courbe filtrée.

Lors d'une troisième étape F3, le calculateur 11 détermine les points caractéristiques de la courbe filtrée obtenue à la deuxième étape F2. La détermination des extrema locaux de la courbe 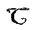 peut utiliser le premier seuil prédéterminé associé au profil sélectionné à la première étape F1. A partir de ces points caractéristiques, le calculateur détermine ensuite le code binaire C' dont chaque composante code le sens de variation de deux points caractéristiques consécutifs. Ledit code est déterminé de la même manière que le code binaire déterminé à la septième étape E7 pour les points caractéristiques récurrents d'une courbe d'apprentissage.

Lors d'une quatrième étape F4, le calculateur détermine si le code C' obtenu à la troisième étape F3 est identique au code C associé au profil sélectionné à la première étape F1.
Le cas échéant, la forme de la courbe 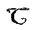 correspond au profil de courbe sélectionné et le calculateur réalise alors la cinquième étape F5 lors de laquelle le profil sélectionné est utilisé pour déterminer un point pertinent sur la courbe 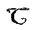 . Dans le cas contraire, la courbe 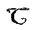 ne correspond pas au profil sélectionné et le calculateur 11 met à nouveau en oeuvre les étapes F1 à F4.

Lors de la cinquième étape F5, le calculateur détermine un point pertinent, à titre d'exemple son abscisse, sur la courbe 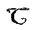 à partir des points caractéristiques déterminés à la troisième étape F3 et du modèle M associé au profil sélectionné à la première étape F1.

La courbe 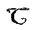 peut également être multidimensionnelle. Selon une première variante, si les profils mémorisés lors de la phase d'apprentissage sont tous relatifs à une seule et même dimension, les étapes F1 à F5 ci-dessus sont appliquées à cette dimension. Selon une deuxième variante, si des profils associés chacun à une dimension ont été mémorisés lors de la phase d'apprentissage pour au moins deux des dimensions de la courbe 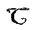 , les étapes F1 à F5 sont appliquées séparément à chacune de ces dimensions et un point pertinent moyen est déterminé à partir des points pertinents déterminés selon chacune des dimensions, l'abscisse du point pertinent moyen pouvant par exemple être une moyenne des abscisses des points pertinents déterminés selon chacune des dimensions. Selon une troisième variante, si les profils mémorisés sont multidimensionnels, comportant chacun un modèle multidimensionnel, les étapes F1 à F5 décrites ci-dessus sont alors appliquées de sorte que, lors de la troisième étape F3, les points caractéristiques de la courbe et un code binaire soient déterminés pour chacune des dimensions de la courbe. Le calculateur détermine alors lors de la quatrième étape F4 le profil multidimensionnel le plus adapté à la courbe à partir de ces codes binaires et des codes binaires enregistrés dans le profil multidimensionnel sélectionné.

Lors d'une sixième étape F6, le calculateur 11 peut utiliser un ou plusieurs points pertinents déterminés par la mise en oeuvre des étapes F1 à F5 pour estimer au moins un indicateur spécifique représentatif de l'état de fonctionnement du moteur 9. Comme indiqué précédemment, de tels indicateurs peuvent être la durée des différentes phases de démarrage du moteur, le temps d'allumage, le temps d'arrêt ou encore les gradients maximal et moyen de la température des gaz d'échappement.

Différents traitements peuvent être mis en oeuvre à partir de ces indicateurs.

Un premier traitement peut consister en un diagnostic de l'état du moteur à l'instant d'acquisition des courbes utilisées pour déterminer lesdits indicateurs. Lors d'une septième étape F7, le calculateur utilise ainsi les indicateurs pour estimer si le moteur présente une anomalie de fonctionnement qui pourrait justifier un retour en atelier pour maintenance, par exemple pour remplacer une pièce défectueuse.

Un second traitement peut consister en un pronostic d'une dégradation à venir du fonctionnement du moteur à partir de mesures successives. Lors d'une huitième étape F8, les indicateurs déterminés à partir de mesures relatives à un vol du moteur sont ainsi mémorisés et cette étape est répétée vol après vol afin d'obtenir une succession d'indicateurs dont l'évolution dans le temps est représentatif de l'évolution de l'état de fonctionnement du moteur 9. Lors d'une neuvième étape F9, le calculateur met alors en oeuvre un processus de pronostic d'une dégradation future de l'état du moteur à partir de l'évolution dans le temps des indicateurs mémorisés vol après vol à la huitième étape F8.

## Revendications

1. Procédé d'estimation sur une courbe d'un point pertinent pour une détection d'anomalie d'un moteur (9), ladite courbe représentant une évolution en fonction du temps de paramètres physiques de fonctionnement du moteur mesurés par au moins un capteur (10) sur ledit moteur,
mis en oeuvre par un calculateur (11) relié à des premiers moyens de stockage (15),
lesdits premiers moyens de stockage (15) mémorisant au moins un profil comprenant un code binaire dont chaque composante code un sens de variation entre deux points caractéristiques consécutifs d'au moins une courbe d'apprentissage, un modèle permettant d'estimer un point pertinent à partir d'un ensemble de points caractéristiques d'une courbe, et un filtre,
ledit procédé comprenant :
a/ (F1) la sélection d'un profil mémorisé dans les premiers moyens de stockage (15);
b/ (F2) l'application du filtre du profil sélectionné à ladite courbe ;
c/ (F3) la détermination d'un ensemble de points caractéristiques de ladite courbe filtrée et d'un code binaire dont chaque composante code le sens de variation de deux points caractéristiques consécutifs appartenant audit ensemble de points caractéristiques ;
d/ (F4) la comparaison du code déterminé et du code du profil sélectionné ;
e/ (F5) en fonction de ladite comparaison, l'estimation du point pertinent sur ladite courbe à partir des points caractéristiques de ladite courbe filtrée et du modèle du profil sélectionné ;

2. Procédé selon la revendication 1, dans lequel si le code déterminé est différent du code du profil sélectionné, un nouveau profil mémorisé dans les premiers moyens de stockage est sélectionné et le calculateur exécute à nouveau les étapes b/ à e/ ;

3. Procédé selon l'une des revendications 1 à 2, dans lequel le point pertinent est choisi parmi un instant d'ouverture d'une valve, un instant de variation nette d'une température ou d'une pression, un instant d'atteinte d'un certain régime par un compresseur haute pression ou un compresseur basse pression, un instant de débrayage d'un démarreur ;

4. Procédé selon l'une des revendications 1 à 3, dans lequel les points caractéristiques de courbes sont choisis parmi des points d'inflexion, des extrema locaux, des changements brusques de pentes ;

5. Procédé selon l'une des revendications 1 à 4, dans lequel un profil comprend en outre un seuil et dans lequel les points caractéristiques sont des extrema locaux consécutifs dont la différence d'ordonnées est supérieure audit seuil ;

6. Procédé selon l'une des revendications 1 à 5, dans lequel lesdits modèles sont des modèles linéaires généralisés avec sélection de variables ;

7. Procédé selon l'une des revendications 1 à 6, dans lequel lesdits modèles vérifient l'équation : t = AX
où
- t est l'abscisse du point pertinent à estimer,
- A est un vecteur ligne contenant des coefficients de régression,
- X est un vecteur colonne dont les composantes sont des abscisses des points caractéristiques et leurs transformées ;

8. Procédé selon l'une des revendications 1 à 7, comprenant en outre (F6) une étape d'estimation à partir des points pertinents estimés d'indicateurs spécifiques choisis pour leur représentativité de l'état de fonctionnement du moteur ;

9. Procédé selon la revendication 8, comprenant en outre (F7) une étape de diagnostic du moteur à partir des indicateurs spécifiques estimés ;

10. Procédé selon la revendication 8, comprenant (F8) une étape de mémorisation dans des moyens de stockage, vol après vol, des indicateurs spécifiques estimés et (F9) une étape de pronostic d'une dégradation de l'état de fonctionnement du moteur à partir de l'évolution des indicateurs spécifiques mémorisés ;

11. Procédé selon l'une des revendications 1 à 10, dans lequel chaque profil mémorisé dans les premiers moyens de stockage est déterminé par un processus d'apprentissage ;

12. Procédé selon la revendication 11, dans lequel le processus d'apprentissage pour un profil comprend :
a/ (E1) l'affichage par un dispositif d'affichage (19) de plusieurs courbes d'apprentissage ;
b/ (E2) la détermination par ledit calculateur (11) d'un point pertinent pour la détection d'anomalie sur chacune des courbes d'apprentissage, ledit point pertinent de chacune des courbes d'apprentissage étant sélectionné par un expert à l'aide de moyens de saisie (20) ;
c/ (E3) le stockage dans des deuxièmes moyens de stockage (21) de chacune desdites courbes d'apprentissage associée audit point pertinent déterminé ;
d/ (E4) la sélection par ledit calculateur (11) d'un filtre et d'un modèle ;
e/ (E5) l'application par ledit calculateur(11) du filtre sélectionné à chacune des courbes d'apprentissage ;
f/ (E6) la détermination par ledit calculateur (11) des points caractéristiques de chacune des courbes d'apprentissage filtrées ;
g/ (E7) la détermination par ledit calculateur (11) parmi les points caractéristiques déterminés de points caractéristiques récurrents apparaissant sur chaque courbe d'apprentissage filtrée et d'un code binaire dont chaque composante code le sens de variation entre deux points caractéristiques récurrents consécutifs ;
h/ (E8) à partir des points caractéristiques récurrents déterminés et du modèle sélectionné, l'estimation par ledit calculateur (11) du point pertinent ;
i/ (E9) l'estimation par ledit calculateur (11) de l'erreur associée aux filtre et modèle sélectionnés à l'étape d/ par comparaison du point pertinent estimé avec le point pertinent sélectionné par l'expert à l'étape b/ ;
j/ (E11) la mémorisation, dans lesdits premiers moyens de stockage (15), d'un profil comprenant ledit code binaire déterminé, ledit filtre et ledit modèle permettant de minimiser l'erreur estimée ou d'obtenir une erreur estimée inférieure à un seuil déterminé (E10) ;

13. Produit programme d'ordinateur comprenant des instructions de code de programme pour l'exécution des étapes du procédé selon l'une quelconque des revendications précédentes lorsque ledit programme est exécuté sur un ordinateur ;

14. Système de traitement de données comprenant un calculateur (11), des moyens de saisie (20), au moins un dispositif d'affichage (19) **caractérisé en ce qu'**il est configuré pour mettre en oeuvre les étapes du procédé selon l'une quelconque des revendications 1 à 12.

## Patentansprüche

1. Verfahren zum Schätzen eines relevanten Punktes auf einer Kurve zum Erkennen einer Anomalie eines Motors (9), wobei die Kurve eine zeitabhängige Entwicklung von physikalischen Betriebsparametern des Motors darstellt, die von zumindest einem Sensor (10) am Motor gemessen und von einem Rechner (11) verwendet werden, der mit ersten Speichermitteln (15) verbunden ist,
wobei die ersten Speichermittel (15) zumindest ein Profil speichern, das einen Binärcode enthält, dessen jede Komponente eine Variationsrichtung zwischen zwei aufeinanderfolgenden charakteristischen Punkten zumindest einer Lernkurve codiert, wobei ein Modell ermöglicht, einen relevanten Punkt aus einem Satz charakteristischer Punkte einer Kurve zu schätzen, und ein Filter umfasst,
wobei das Verfahren Folgendes umfasst:
a/ (F1) Auswahl eines in den ersten Speichermitteln (15) gespeicherten Profils;
b/ (F2) Anwendung des Filters des ausgewählten Profils auf die Kurve;
c/ (F3) Bestimmung eines Satzes von charakteristischen Punkten der gefilterten Kurve und eines Binärcodes, dessen jede Komponente die Variationsrichtung von zwei aufeinanderfolgenden charakteristischen Punkten codiert, die zum Satz von charakteristischen Punkten gehören;
d/ (F4) Vergleich des ermittelten Codes mit dem Code des gewählten Profilcodes;
e/ (F5) Je nach dem Vergleich die Schätzung des relevanten Punktes auf der Kurve ausgehend von den charakteristischen Punkten der gefilterten Kurve und dem Modell des ausgewählten Profils;

2. Verfahren nach Anspruch 1, wobei, wenn sich der ermittelte Code von dem Code des ausgewählten Profils unterscheidet, ein neues Profil ausgewählt wird, das auf dem ersten Speichermedium gespeichert ist, und der Rechner die Schritte b/ bis e/ erneut ausführt;

3. Verfahren nach einem der Ansprüche 1 bis 2, wobei der relevante Punkt aus einer Ventilöffnungszeit, einer deutlichen Temperatur- oder Druckänderungszeit, einem Moment des Erreichens einer bestimmten Drehzahl durch einen Hochdruckverdichter oder einen Niederdruckverdichter, einem Starterabschaltmoment ausgewählt wird;

4. Verfahren nach einem beliebigen der vorstehenden Ansprüche 1 bis 3, wobei die charakteristischen Punkte von Kurven aus Wendepunkten, lokalen Extremen, plötzlichen Gefälleänderungen ausgewählt werden;

5. Verfahren nach einem beliebigen der vorstehenden Ansprüche 1 bis 4, wobei ein Profil ferner einen Schwellenwert umfasst, und wobei die charakteristischen Punkte aufeinanderfolgende lokale Extreme sind, deren Ordinatendifferenz größer als der Schwellenwert ist;

6. Verfahren nach einem beliebigen der vorstehenden Ansprüche 1 bis 5, wobei die Modelle verallgemeinerte lineare Modelle mit Auswahl von Variablen sind;

7. Verfahren nach einem beliebigen der vorstehenden Ansprüche 1 bis 6, wobei die Modelle die Gleichung t = AX bestätigen,
wobei
- t die Abszisse des zu schätzenden relevanten Punktes ist,
- A ein Linienvektor mit Regressionskoeffizienten ist,
- X ein Spaltenvektor ist, dessen Komponenten Abszissen der charakteristischen Punkte und deren Transformationen sind;

8. Verfahren nach einem beliebigen der vorstehenden Ansprüche 1 bis 7, das ferner (F6) einen Schritt mit Schätzung des Betriebszustands des Motors ausgehend von den geschätzten relevanten Punkten spezifischer Indikatoren umfasst, die für ihre Repräsentativität ausgewählt wurden;

9. Verfahren nach Anspruch 8, das ferner (F7) einen Schritt mit Motordiagnose basierend auf den geschätzten spezifischen Indikatoren umfasst;

10. Verfahren nach Anspruch 8, das (F8) einen Schritt mit Speichern der geschätzten spezifischen Indikatoren in Speichermitteln nach jedem Flug umfasst und (F9) einen Schritt mit Prognose einer Verschlechterung des Betriebszustandes des Motors ausgehend von der Fortentwicklung der gespeicherten spezifischen Indikatoren;

11. Verfahren nach einem beliebigen der vorstehenden Ansprüche 1 bis 10, wobei jedes in den ersten Speichermitteln gespeicherte Profil durch einen Lernprozess bestimmt wird;

12. Verfahren nach Anspruch 11, wobei der Lernprozess für ein Profil Folgendes umfasst:
a/ (E1) Anzeige mehrerer Lernkurven durch eine Anzeigevorrichtung (19);
b/ (E2) Bestimmung eines relevanten Punktes durch den Rechner (11) zum Erkennen von Anomalien auf jeder der Lernkurven, wobei der relevante Punkt jeder der Lernkurven von einem Experten unter Verwendung von Eingabemitteln (20) ausgewählt wird;
c/ (E3) Speicherung jeder der Lernkurven, die dem bestimmten relevanten Punkt zugeordnet sind, in zweiten Speichermitteln (21);
d/ (E4) Auswahl eines Filters und eines Modells durch den Rechner (11);
e/ (E5) Anwendung des ausgewählten Filters auf jede der Lernkurven durch den Rechner (11);
f/ (E6) Bestimmung der charakteristischen Punkte jeder der gefilterten Lernkurven durch den Rechner (11);
g/ (E7) Bestimmung durch den Rechner (11) von wiederkehrenden charakteristischen Punkten unter den auf jeder gefilterten Lernkurve erscheinenden bestimmten charakteristischen Punkten und eines Binärcodes, dessen jede Komponente die Variationsrichtung zwischen zwei aufeinanderfolgenden wiederkehrenden charakteristischen Punkten codiert;
h/ (E8) ausgehend von den ermittelten wiederkehrenden charakteristischen Punkten und dem ausgewählten Modell, die Schätzung des relevanten Punktes durch den Rechner (11);
i/ (E9) Schätzung durch den Rechner (11) des Fehlers, der mit den in Schritt d/ ausgewählten Filtern und Modellen verbunden ist, durch Vergleich des geschätzten relevanten Punktes mit dem in Schritt b/ vom Experten ausgewählten relevanten Punkt;
j/ (E11) Speicherung eines Profils in den ersten Speichermitteln (15), das den bestimmten Binärcode umfasst, wobei das Filter und das Modell ermöglichen, den geschätzten Fehler zu minimieren oder einen geschätzten Fehler unter einem bestimmten Schwellenwert (E10) zu erzielen;

13. Rechnerprogramm-Produkt mit Programmcode-Anweisungen zum Durchführen der Verfahrensschritte nach einem beliebigen der vorstehenden Ansprüche, wenn das Programm auf einem Rechner läuft;

14. Datenverarbeitungssystem umfassend einen Rechner (11), Eingabemittel (20), zumindest eine Anzeigevorrichtung (19), **dadurch gekennzeichnet, dass** es so konfiguriert ist, dass es die Schritte des Verfahrens nach einem beliebigen der vorstehenden Ansprüche 1 bis 12 durchführt.

## Claims

1. A method for estimating on a curve a relevant point for detecting an anomaly of an engine (9), said curve representing a time-dependent change in physical operation parameters of the engine measured by at least one sensor (10) on said engine,
applied by a computer (11) connected to first storage means (15), said first storage means (15) storing in memory at least one profile comprising a binary code, each component of which codes a direction of variation between two consecutive characteristic points of at least one learning curve, a model allowing estimation of a relevant point from a set of characteristic points of a curve, and a filter,
said method comprising:
a/ (F1) selecting a profile stored in memory in the first storage means (15);
b/ (F2) applying the filter of the selected profile to said curve;
c/ (F3) determining a set of characteristic points of said filtered curve and of a binary code, each component of which codes the direction of variation of two consecutive characteristic points belonging to said set of characteristic points;
d/ (F4) comparing the determined code and the code of the selected profile;
e/ (F5) depending on said comparison, estimating the relevant point on said curve from the characteristic points of said filtered curve and from the model of the selected profile.

2. The method according to claim 1, wherein if the determined code is different from the code of the selected profile, a new profile stored in memory in the first storage means is selected and the computer again executes steps b/ to e/.

3. The method according to one of claims 1 to 2, wherein the relevant point is selected from among an instant for opening a valve, an instant for sharp variation of a temperature or pressure, an instant for attaining certain conditions by a high pressure compressor or a low pressure compressor, a disengagement instant of a starter.

4. The method according to one of claims 1 to 3, wherein the characteristic points of curves are selected from among inflection points, local extrema, sudden changes in slopes.

5. The method according to one of claims 1 to 4, wherein a profile further comprises a threshold and wherein the characteristic points are consecutive local extrema, for which the difference in ordinates is greater than said threshold.

6. The method according to one of claims 1 to 5, wherein said models are generalized linear models with selection of variables.

7. The method according to one of claims 1 to 6, wherein said models verify the equation: t = AX
Wherein
- t is the abscissa of the relevant point to be estimated,
- A is a line vector containing regression coefficients,
- X is a column vector, whose the components are abscissas of the characteristic points and of their transforms.

8. The method according to one of claims 1 to 7, further comprising (F6) a step for estimating from estimated relevant points of specific indicators selected for their representativity of the operating condition of the engine.

9. The method according to claim 8, further comprising (F7) a step for diagnosing the engine from estimated specific indicators.

10. The method according to claim 8, comprising (F8) a step for storing in memory in storage means, flight after flight, estimated specific indicators and (F9) a step for predicting a degradation of the operation state of the engine from the time-dependent change of the specific indicators stored in memory.

11. The method according to one of claims 1 to 10, wherein each profile stored in memory in the first storage means is determined by a learning process.

12. The method according to claim 11, wherein the learning process for a profile comprises:
a/ (E1) displaying by a display device (19) several learning curves;
b/ (E2) determining by said computer (11) a relevant point for detecting an anomaly on each of the learning curves, said relevant point of each of the learning curves being selected by an expert by means of input means (20);
c/ (E3) storing in second storage means (21) each of said learning curves associated with said determined relevant point;
d/ (E4) selecting with said computer (11) a filter and a model;
e/ (E5) applying with said computer (11) the selected filter to each of the learning curves;
f/ (E6) determining with said computer (11) characteristic points of each of the filtered learning curves;
g/ (E7) determining with said computer (11) from the determined characteristic points, recurrent characteristic points appearing on each filtered learning curve and a binary code, for which each component codes the direction of variation between two consecutive recurrent characteristic points;
h/ (E8) from determined recurrent characteristic points and from the selected model, estimating with said computer (11) the relevant point;
i/ (E9) estimating with said computer (11) the error associated with the selected filter and model in step d/ by comparing the relevant point estimated with the relevant point selected by the expert in step b/;
j/ (E11) storing in memory, in said first storage means (15), a profile comprising said determined binary code, said filter and said model allowing minimization of the estimated error or obtaining an estimated error below a determined threshold (E10).

13. A computer program product comprising program code instructions for executing steps of the method according to any of the preceding claims when said program is executed on a computer.

14. A data processing system comprising a computer (11), input means (20), at least one display device (19) **characterized in that** it is configured for applying the steps of the method according to any one of claims 1 to 12.
